(19) Europäisches Patentamt / European Patent Office / Office européen des brevets

(11) **EP 1 324 110 B1**

(12) **FASCICULE DE BREVET EUROPEEN**

(45) Date de publication et mention
de la délivrance du brevet:
**02.06.2010 Bulletin 2010/22**

(51) Int Cl.:
***G02F 1/31*** *(2006.01)*     ***G02F 1/1335*** *(2006.01)*

(21) Numéro de dépôt: **01130797.2**

(22) Date de dépôt: **24.12.2001**

(54) **Cellule à cristaux liquides comportant au moins deux réseaux de diffraction, notamment pour un diviseur de faisceau optique**

Flüssigkristallzelle mit mindestens zwei Beugungsgittern insbesondere für einen optischen Strahlteiler

Liquid crystal cell having at least two diffraction gratings in particullar for an optical beam splitter

(84) Etats contractants désignés:
**CH DE FR GB IT LI**

(43) Date de publication de la demande:
**02.07.2003 Bulletin 2003/27**

(73) Titulaire: **EM Microelectronic-Marin SA
2074 Marin (CH)**

(72) Inventeur: **Dufresne, Christophe
25390 Guyans-Vennes (FR)**

(74) Mandataire: **Ravenel, Thierry Gérard Louis et al
ICB
Ingénieurs Conseils en Brevets SA
Faubourg de l'Hôpital 3
2001 Neuchâtel (CH)**

(56) Documents cités:
**US-A- 4 251 137    US-A- 4 729 640
US-A- 4 850 681    US-A- 6 043 910**

## Description

La présente invention concerne une cellule à cristaux liquides comportant au moins deux réseaux de diffraction, la cellule comportant une couche de cristaux liquides biréfringents dans une chambre dont deux faces opposées sont définies par deux substrats pourvus d'électrodes transparentes, les cristaux liquides présentant un indice de réfraction ordinaire et un indice de réfraction extraordinaire.

L'invention concerne aussi un diviseur de faisceau optique comportant une telle cellule à cristaux liquides et des moyens de commande pour appliquer sélectivement une tension entre lesdites électrodes de la cellule. La portée du terme "optique", tel qu'utilisé ici, n'est pas limitée à la lumière visible, mais couvre d'autres domaines du spectre électromagnétique, tels que l'infrarouge et l'ultraviolet.

Par la demande de brevet FR 2 254 057, on connaît un tel diviseur de faisceau optique, où un réseau de diffraction de phase est réalisé par biréfringence dans une cellule à cristaux liquides nématiques grâce à un ensemble d'électrodes linéaires parallèles disposées sur une des faces de la couche de cristaux liquides, ces électrodes étant adjacentes mais isolées électriquement les unes des autres. Une seule contre-électrode peut couvrir l'autre face de la couche de cristaux liquides. En portant sélectivement certaines des électrodes à différents potentiels électriques prédéfinis, on crée un réseau de lignes en face desquelles les cristaux liquides présentent à la lumière polarisée un indice de réfraction différent de celui qu'ils présentent entre les lignes. Ceci produit des déphasages différents et donc une diffraction de la lumière traversant le réseau. Un faisceau lumineux polarisé traversant cette cellule ou réfléchi dans celle-ci peut alors être dévié et divisé en deux quand la cellule est excitée. Quand la cellule n'est pas excitée, le faisceau n'est pas divisé.

Dans le brevet US 5 650 835, il est prévu d'utiliser une cellule du même genre pour diviser un faisceau lumineux entrant en plusieurs faisceaux sortants, dont on peut modifier le nombre en modifiant le motif du réseau de diffraction grâce à une sélection appropriée des tensions appliquées aux différentes électrodes.

Ces agencements compliquent notablement le réseau des électrodes et les connexions respectives des électrodes au circuit de commande de la cellule, ainsi que l'adressage des électrodes par le circuit de commande. Un autre inconvénient est que les limites entre les régions excitées et non excitées de la couche de cristaux liquides ne sont pas nettes, ce qui nuit à l'efficacité du réseau de diffraction.

Le préambule de la première revendication est connu de US 4729640 qui décrit un système à cristaux liquides contenant un ou plusieurs réseaux de diffraction entourant des cristaux liquides dont l'indice de réfraction peut être modulé. Un tel réseau ne permet toutefois pas de commuter sélectivement un nombre de faisceaux diffractés sortant prédéfinis.

Une application typique d'un tel diviseur de faisceau réside dans la lecture et l'écriture de données sur un disque optique réinscriptible à haut débit, notamment du type CD ou DVD. Par exemple, la figure 8 de la publication WO 99/42993 montre que, par l'application d'une tension appropriée à la cellule à cristaux liquides, un faisceau produit par une diode laser peut être divisé en plusieurs faisceaux pour lire simultanément plusieurs pistes du disque optique, alors que l'état non excité de la cellule permet d'écrire des données sur le disque optique avec la puissance totale du faisceau non divisé.

La présente invention vise à créer un réseau de diffraction de phase dans une cellule à cristaux liquides d'une manière qui évite les inconvénients susmentionnés de l'art antérieur.

A cet effet, il est prévu une cellule à cristaux liquides du genre indiqué dans la première revendication.

Ainsi, les électrodes peuvent avantageusement être continues sur la totalité de ladite région, qui constitue la partie utile de la cellule. Selon que les cristaux liquides sont excités ou non par une tension électrique appropriée entre les deux électrodes, ils présentent des indices de réfraction différents pour un faisceau de lumière polarisé traversant la cellule. Lorsque cet indice est le même que celui du matériau formant les bandes d'un des réseaux, il n'y a pas de diffraction, c'est-à-dire que ce réseau est inactif. Lorsque l'indice de réfraction du cristal liquide est différent de celui dudit matériau, un réseau de diffraction de phase est formé par le fait que les intervalles entre les bandes sont remplis de cristaux liquides et produisent donc un déphasage différent de celui produit par lesdites bandes de ce réseau. En d'autres termes, ce réseau de diffraction passe d'un état actif à un état inactif et vice-versa par simple commutation de la tension entre les deux électrodes.

Selon l'invention, une telle cellule à cristaux liquides comporte dans ladite région un second réseau de diffraction, formé sur l'autre face de la chambre par des bandes parallèles non contiguës faites d'un second matériau transparent sensiblement isotrope optiquement, ayant un indice de réfraction sensiblement égal à l'autre desdits indices de réfraction des cristaux liquides.

Dans ce cas aussi, les électrodes s'étendent de préférence sur la totalité de la région qui constitue la partie utile de la cellule. Selon que les cristaux liquides sont excités ou non par une tension électrique appropriée entre les deux électrodes, ils présentent à un faisceau de lumière polarisé traversant la cellule un indice de réfraction égal à celui de l'un ou l'autre des matériaux formant les bandes respectives du premier et du second réseau de diffraction, ce qui rend inactif le réseau concerné. Lorsque la tension est nulle entre les électrodes, l'un des réseaux de diffraction est actif et l'autre est inactif, et le contraire se réalise lorsqu'une tension appropriée est appliquée entre les deux électrodes. La commutation de la tension produit donc une commutation d'un réseau de diffraction à l'autre. Les deux réseaux étant en général différents, par exemple afin de diviser un faisceau lumineux en différents nombres de faisceaux sortants, on peut sélectionner très simplement l'un ou l'autre de ces nombres de faisceaux en enclenchant ou déclenchant la tension entre les électrodes.

Un diviseur de faisceau optique selon l'invention peut comporter simplement une cellule à cristaux liquides telle que définie ci-dessus, un polariseur linéaire disposé devant ladite cellule et des moyens de commande pour appliquer sélectivement une tension entre les électrodes de ladite cellule.

D'autres caractéristiques et avantages de la présente invention apparaîtront dans la description suivante d'un mode de réalisation préféré, présenté à titre d'exemple non limitatif en référence aux dessins annexés, dans lesquels :

- la figure 1 est une vue schématique en coupe transversale d'une cellule à cristaux liquides non revendiquée, comportant un réseau de diffraction de phase qui est commutable entre un état inactif et un état actif;

- la figure 2 représente schématiquement un diviseur de faisceau optique comportant une cellule à cristaux liquides selon la figure 1 et illustre l'effet produit quand le réseau de diffraction est inactif;

- la figure 3 est une vue analogue à la figure 2, illustrant l'effet produit quand le réseau de diffraction est actif;

- la figure 4 est une vue schématique en coupe transversale d'une cellule à cristaux liquides selon l'invention, comportant deux réseaux de diffraction de phase qui sont commutables chacun entre un état inactif et un état actif;

- la figure 5 représente schématiquement un diviseur de faisceau optique comportant une cellule à cristaux liquides selon la figure 4 et illustre l'effet produit quand l'un des réseaux de diffraction est inactif et l'autre est actif, et

- la figure 6 est une vue analogue à la figure 5, montrant l'effet produit quand l'autre réseau de diffraction est actif tandis que le premier est inactif.

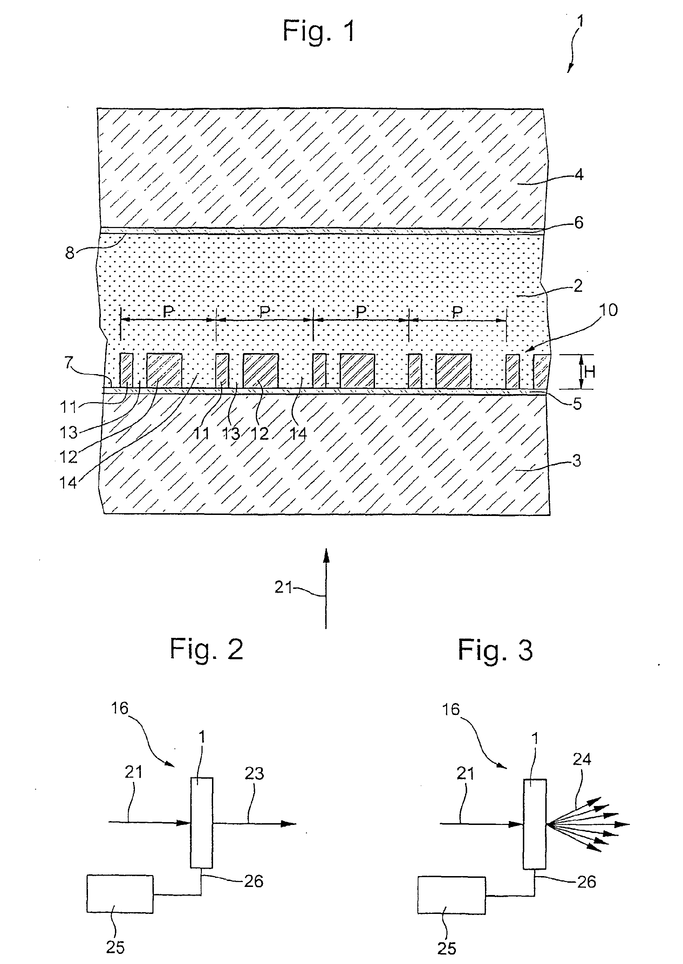

La cellule à cristaux liquides 1 non revendiquée représentée schématiquement dans la figure 1 comporte une couche de cristaux liquides 2 remplissant une chambre formée entre deux substrats parallèles transparents 3 et 4 revêtus d'électrodes transparentes 5 et 6 du côté de la couche de cristaux liquides. On notera que cette figure n'est pas à l'échelle, certaines épaisseurs étant fortement exagérées par rapport aux largeurs afin de clarifier le dessin. La figure ne représente qu'une partie de la région utile de la cellule 1, région dans laquelle les électrodes 5 et 6 sont continues et couvrent la totalité des deux faces opposées 7 et 8 de la chambre contenant les cristaux liquides 2. Le pourtour de cette chambre est délimité de manière classique par un cadre fait d'une matière de scellement qui lie l'un à l'autre les substrats 3 et 4, chacune des électrodes 5 et 6 ayant une piste de connexion qui traverse le cadre de scellement pour permettre les deux connexions électriques nécessaires à l'extérieur de la cellule 1.

Sur la face 7 de la chambre contenant les cristaux liquides, un réseau de diffraction 10 est formé par une pluralité de bandes parallèles 11, 12 séparées par des intervalles 13, 14 qui sont occupés par les cristaux liquides 2. Les bandes 11 et 12 sont faites d'un matériau transparent et ont toutes la même épaisseur H. Dans cet exemple, toutes les bandes 11 ont une même largeur donnée, et toutes les bandes 12 ont une même largeur, différente de celle des bandes 11. De même, la largeur des intervalles 13 est différente de celle des intervalles 14. L'ensemble formé par une bande 11, un intervalle 13, une bande 12 et un intervalle 14 constitue le motif de base du réseau de diffraction, ayant largeur totale P qui est le pas du réseau formé par la juxtaposition de plusieurs de ces motifs de base dans la région utile de la cellule 1.

Dans le présent exemple, les cristaux liquides biréfringents 2 sont de préférence du type nématique, mais d'autres types tels que les cristaux liquides ferroélectriques ou cholestériques peuvent être utilisés. Il est bien connu que ces cristaux liquides ont un axe optique dans la direction duquel ils présentent un indice de réfraction extraordinaire $n_e$ différent de l'indice de réfraction ordinaire $n_o$ qu'ils présentent dans toute direction perpendiculaire à leur axe optique.

Les bandes 11 et 12 du réseau de diffraction 10 sont faites d'un matériau transparent sensiblement isotrope optiquement, ayant un indice de réfraction sensiblement égal à l'un des deux indices des cristaux liquides 2. Il en résulte que, dans certaines conditions, un faisceau lumineux traversant la cellule 1 rencontrera des matériaux ayant le même indice de réfraction dans tout le volume compris entre les électrodes 5 et 6. Dans le présent exemple, le matériau des bandes 11 et 12 du réseau de diffraction est un polymère solide transparent, et plus précisément un photopolymère, ce qui permet de fabriquer les bandes par dépôt d'une couche uniforme du photopolymère et de graver ensuite cette couche par un procédé classique de photolithographie pour former les intervalles 13 et 14 conformément au motif voulu du réseau de diffraction. A titre de matériau approprié, on peut citer la résine photosensible négative commercialisée sous la désignation OPTMER NN 700 G par la société JSR Electronics N.V. de Louvain, Belgique. L'indice de réfraction $n_r$ de cette résine vaut 1,52.

Comme cristaux liquides nématiques dont l'indice de réfraction ordinaire est sensiblement égal à la valeur susmentionnée de $n_r$, on peut choisir le produit MLC-11100-100 de la société Merck KG, Darmstadt, Allemagne. Les indices de réfraction de ce produit valent $n_o$ = 1,52 et $n_e$ = 1,659 à 589 nm.

L'épaisseur H des bandes 11 et 12 est choisie de manière à produire un déphasage différentiel $\Delta\varphi$ entre la lumière qui traverse ces bandes et la lumière qui traverse la même épaisseur de cristaux liquides 2 dans les intervalles 13 et 14, H étant donné par la formule :

$$H = (\lambda \cdot \Delta\varphi) / [2\pi(n_e - n_o)]$$

où $\lambda$ est la longueur d'onde de la lumière.

Les substrats 3 et 4 de la cellule 1 peuvent être faits de toute matière transparente appropriée, par exemple en verre. De manière classique, les électrodes transparentes 5 et 6 peuvent être en oxyde d'étain et d'indium (ITO). Afin que l'axe optique des cristaux liquides 2 ait une direction sensiblement parallèle aux électrodes et aux bandes 11 et 12 du réseau de diffraction lorsqu'il n'y a pas de tension électrique entre les électrodes 5 et 6, on peut utiliser des solutions connues, telles qu'un brossage des surfaces exposées des électrodes et des bandes ou l'application d'une couche d'alignement sur ces surfaces. Ainsi, dans l'état non excité de la cellule 1, les cristaux liquides 2 s'alignent parallèlement à la direction des bandes 11 et 12 et présentent, perpendiculairement au plan du réseau, un indice de réfraction $n_o$ qui est sensiblement égal à l'indice de réfraction $n_r$ du matériau de ces bandes. Un faisceau lumineux incident 21 rencontrera ainsi le même indice de réfraction en tout point du réseau 10 et ne sera pas diffracté. Ceci est vrai également si la lumière du faisceau est polarisée linéairement, que ce soit dans la direction des lignes du réseau ou perpendiculairement à cette direction.

L'état excité de la cellule 1 est créé par l'application d'une tension électrique entre les deux électrodes 7 et 8, suffisante pour orienter l'axe des cristaux liquides 2 perpendiculairement aux électrodes, donc parallèlement à la direction de propagation de la lumière du faisceau 21. Pour cette direction de propagation, les cristaux liquides présentent alors leur indice de réfraction extraordinaire $n_e$, notamment dans les intervalles 13 et 14 du réseau, tandis que l'indice des bandes 11 et 12 est différent de celui-ci. Si la lumière du faisceau 21 est polarisée linéairement dans une direction perpendiculaire aux bandes du réseau 10, celui-ci ne produit pas de diffraction. Si au contraire la lumière est polarisée parallèlement aux bandes du réseau 10, une diffraction de phase sera produite comme on l'a expliqué plus haut.

Un homme du métier est en mesure de calculer, notamment d'après la théorie des réseaux de diffraction, les différentes largeurs des bandes et des intervalles du réseau de diffraction 10 pour que ce réseau divise le faisceau incident 21 en un nombre voulu de faisceaux sortants 24, comme on l'a représenté schématiquement dans la figure 3. Avec le motif représenté schématiquement dans la figure 1, on obtient sept faisceaux sortants 24 dont les intensités sont du même ordre de grandeur. Bien entendu, la diffraction produit en outre des faisceaux sortants marginaux non désirés, mais le réseau peut être optimisé pour que l'intensité de chacun de ces faisceaux marginaux soit très faible, par exemple inférieure à 1/100 de l'intensité du faisceau sortant principal.

La figure 2 représente schématiquement un diviseur de faisceau optique 16 comprenant une cellule à cristaux liquides 1 telle que décrite ci-dessus. Le faisceau lumineux incident 21 peut provenir d'une diode laser non représentée, émettant par exemple dans l'infrarouge à une longueur d'onde de 785 nm. Il est polarisé linéairement dans une direction parallèle à celle du réseau de diffraction 10 de la cellule 1. Si l'on utilise une source lumineuse différente, fournissant de la lumière non polarisée, le diviseur de faisceau peut comporter un polariseur disposé en amont de la cellule 1 ou appliqué directement sur cette la cellule.

Dans le cas de la figure 2, la cellule 1 n'est pas excitée et ne produit pas de diffraction, de sorte que le faisceau incident 21 n'est pas divisé dans la cellule et en ressort sous la forme d'un faisceau unique 23, ceci permet par exemple d'utiliser toute la puissance de la source de lumière pour écrire des données dans un disque optique.

Dans le cas de la figure 3, la cellule 1 est excitée par une tension et divise le faisceau incident 21 en sept faisceaux sortants 24 situés dans un plan commun et qui peuvent être utilisés, par exemple, pour la lecture sur sept endroits différents d'un disque optique.

Ainsi, une simple commutation de la tension dans la cellule à cristaux liquides 1 au moyen d'un dispositif de commande 25 permet de passer de la situation de la figure 2 à celle de la figure 3 et vice-versa d'une manière simple et très rapide. Il faut noter que la liaison électrique 26 entre le dispositif de commande 25 et la cellule 1 ne comporte que deux conducteurs.

Au lieu de fonctionner en mode de transmission, la cellule à cristaux liquides 1 pourrait être agencée pour fonctionner par réflexion : il suffirait pour cela que l'électrode 5 ou le substrat 3 soit réfléchissant.

Contrairement à l'exemple décrit ci-dessus, les bandes 11 et 12 du réseau 10 pourraient être faites d'un matériau transparent dont l'indice de réfraction $n_r$ est sensiblement égal à l'indice de réfraction extraordinaire $n_e$ des cristaux liquides 2. Ainsi, le réseau de diffraction serait actif quand il n'y a pas de tension entre les électrodes 5 et 6, et inactif en présence d'une tension capable d'orienter l'axe des cristaux liquides perpendiculairement au plan du réseau. Avec une telle cellule dans un diviseur de faisceau lumineux du genre représenté au figures 2 et 3, le faisceau serait divisé quand la cellule 1 n'est pas sous tension. On disposerait alors de deux moyens différents pour supprimer la division du faisceau : soit mettre la cellule 1 sous tension, ce qui est le moyen le plus facile et intéressant en pratique, soit faire tourner le plan de polarisation du faisceau incident 21 pour l'orienter transversalement aux lignes du réseau, ce qui supprime la diffraction.

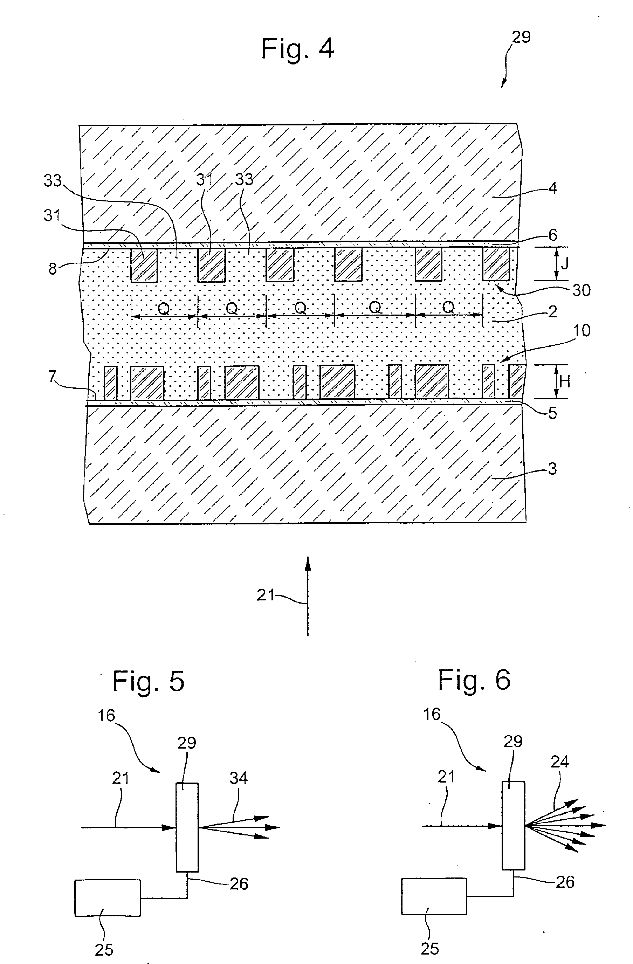

Dans le mode de réalisation de l'invention, illustré par les figures 4 à 6, la cellule à cristaux liquides 29 comporte les mêmes éléments que la cellule 1 décrite plus haut, en particulier le premier réseau de diffraction 10. Elle comporte en outre un second réseau de diffrac-

EP 1 324 110 B1

tion 30 occupant la même région utile de la cellule, mais disposé sur l'autre face 8 de la chambre contenant les cristaux liquides 2 et ayant une géométrie différente de celle du premier réseau. Le réseau 30 est formé par une pluralité de bandes parallèles 31 séparées par des intervalles 33 qui sont occupés par les cristaux liquides 2. Les bandes 31 sont faites d'un matériau transparent et ont toutes la même épaisseur J. L'ensemble formé par une bande 31 et un intervalle 33 constitue le motif de base du réseau de diffraction, ayant une largeur totale Q qui est le pas du réseau formé par la juxtaposition de plusieurs de ces motifs de base dans la région utile de la cellule 29. De préférence, les deux réseaux sont orientés dans la même direction, pour fonctionner avec de la lumière polarisée linéairement dans cette direction. On peut toutefois prévoir des directions différentes, comme on le mentionnera plus loin.

L'épaisseur totale de la couche de cristaux liquides 2 est choisie en fonction de la rotation voulue du plan de polarisation de la lumière, pour que ce plan soit sensiblement parallèle aux lignes de chacun des réseaux 10 et 30.

Les bandes 31 du second réseau 30 sont faites d'un matériau transparent sensiblement isotrope optiquement, ayant un indice de réfraction sensiblement égal à l'indice de réfraction extraordinaire $n_e$ des cristaux liquides 2. Ce matériau peut avantageusement être un photopolymère pour permettre de réaliser le second réseau par un procédé de photolithographie comme décrit plus haut. L'épaisseur J des bandes 31 est choisie selon le même critère que celles des bandes 11 et 12 du premier réseau. Dans le présent exemple, les dimensions des bandes 31 et des intervalles 33 sont déterminées de façon à diviser en trois le faisceau lumineux incident 21 polarisé parallèlement aux lignes des réseaux.

Dans l'état non excité de la cellule 29, c'est-à-dire lorsqu'il n'y a pas de tension électrique entre les électrodes 5 et 6, les cristaux liquides 2 s'alignent parallèlement à la direction des bandes 31 et présentent, perpendiculairement au plan du réseau, leur indice de réfraction ordinaire $n_o$ qui est différent de l'indice de réfraction du matériau de ces bandes. Ainsi, le second réseau de diffraction 30 est actif tandis que le premier réseau 10 est inactif, comme on l'a expliqué plus haut. Le faisceau lumineux incident 21 sera diffracté par le second réseau et divisé en trois faisceaux sortants 34, comme le montre la figure 5. Ces faisceaux peuvent être utilisés par exemple pour l'écriture de données sur un disque optique.

Par contre, lorsqu'on excite la cellule 29 en appliquant entre les deux électrodes 5 et 6 une tension électrique suffisante pour orienter l'axe des cristaux liquides 2 parallèlement à la direction de propagation de la lumière du faisceau 21, les cristaux liquides présentent leur indice de réfraction extraordinaire $n_e$, notamment dans les intervalles 33 du second réseau 30. Comme l'indice des bandes 31 est égal à celui-ci, le second réseau 30 ne produit pas de diffraction, donc est inactif, tandis que le premier réseau 10 est actif comme dans le cas de la figure 3 et divise le faisceau 21 en sept faisceaux sortants 24, comme le montre la figure 6. Ces faisceaux peuvent être utilisés par exemple pour la lecture de données sur un disque optique.

Autrement dit, dans le diviseur de faisceau lumineux représenté aux figures 5 et 6, la commutation de la tension dans la cellule 29 au moyen du dispositif de commande 25 permet de passer directement de trois faisceaux sortants à sept faisceaux sortants et vice-versa.

Les deux réseaux de diffraction de phase 10 et 30 peuvent être disposés dans des directions différentes afin que les faisceaux sortants qu'ils produisent se trouvent dans des plans différents, ce qui peut présenter un intérêt dans les applications de lecture et écriture sur un disque optique. Toutefois, si l'on ne fait pas tourner le plan de polarisation du faisceau incident, les écarts angulaires entre ce plan et les directions respectives des deux réseaux ne doivent pas dépasser quelques degrés.

Selon une variante non représentée et non revendiquée, les deux réseaux 10 et 30 de la cellule 29 pourraient être situés dans des régions différentes de la cellule, pour fonctionner avec des faisceaux incidents distincts provenant par exemple de deux sources distinctes. Dans une variante non revendiquée, les deux réseaux pourraient en outre se trouver sur le même côté de la couche de cristaux liquides et être faits du même matériau, donc être réalisés dans la même étape de fabrication. Les électrodes pourraient être soit communes aux deux régions, soit distinctes. Chaque région d'une telle cellule fonctionnerait de la même manière que la cellule 1 représentant le premier mode de réalisation de l'invention. Dans une variante , un troisième et éventuellement un quatrième réseau pourraient être prévus sur l'autre côté de la couche de cristaux liquides pour permettre un fonctionnement analogue à celui de la cellule 29 selon le mode de réalisation de l'invention.

**Revendications**

1. Cellule à cristaux liquides (29) comportant une couche de cristaux liquides biréfringents (2) dans une chambre dont deux faces opposées sont définies par deux substrats (3, 4) pourvus d'électrodes transparentes (5, 6), les cristaux liquides présentant un indice de réfraction ordinaire et un indice de réfraction extraordinaire, un premier réseau de diffraction (10) étant formé, dans au moins une région de la cellule, sur l'une (7) des deux faces de la chambre par des bandes parallèles non contiguës (11, 12) faites d'un matériau transparent sensiblement isotrope optiquement, ayant un indice de réfraction sensiblement égal à l'un desdits indices de réfraction des cristaux liquides (2), la cellule comportant en outre dans ladite région un second réseau de diffraction (30), formé sur l'autre face (8) de la chambre par des bandes parallèles non contiguës (31) faites d'un second matériau transparent sensiblement isotrope optiquement,

**caractérisée en ce que** le second matériau possède un indice de réfraction sensiblement égal à l'autre desdits indices de réfraction des cristaux liquides (2) et **en ce que** les électrodes, les cristaux liquides et les réseaux sont arrangés de telle sorte qu'en fonctionnement, la commutation de la tension produit, pour un faisceau linéairement polarisé, une commutation d'autorité d'un réseau de diffraction à l'autre.

**2.** Cellule à cristaux liquides selon la revendication 1, **caractérisée en ce que** le matériau desdites bandes (11, 12, 31) est un polymère.

**3.** Cellule à cristaux liquides selon la revendication 2, **caractérisée en ce que** le matériau desdites bandes (11, 12, 31) est un photopolymère, les bandes étant formées par gravure d'une couche du photopolymère.

**4.** Cellule à cristaux liquides selon la revendication 1, **caractérisée en ce que** le second réseau (30) a une géométrie différente de celle du premier réseau (10).

**5.** Cellule à cristaux liquides selon la revendication 1 ou 4, **caractérisée en ce que** les bandes (31) du second réseau ont une direction identique à celle des bandes (11, 12) du premier réseau.

**6.** Cellule à cristaux liquides selon la revendication 1 ou 4, **caractérisée en ce que** les bandes (31) du second réseau ont une direction différente de celle des bandes (11, 12) du premier réseau.

**7.** Cellule à cristaux liquides selon l'une des revendications précédentes, **caractérisée en ce que** lesdites électrodes (5, 6) s'étendent sur la totalité de ladite région.

**8.** Cellule à cristaux liquides selon l'une des revendications précédentes, **caractérisée en ce que** les cristaux liquides (2) sont du type nématique.

**9.** Diviseur de faisceau optique comportant une cellule à cristaux liquides (29) selon l'une des revendications précédentes et des moyens de commande (25) pour appliquer sélectivement une tension entre lesdites électrodes (5, 6) de la cellule à cristaux liquides.

**Claims**

**1.** Liquid crystal cell (29) comprising a layer of birefringent liquid crystals (2) in a chamber whose two opposite faces are defined by two substrates (3, 4) fitted with transparent electrodes (5, 6), wherein the liquid crystals have an ordinary refraction index and an extraordinary refraction index, wherein a first diffraction grating (10) is formed by non contiguous parallel bands (11, 12) made of a transparent, optically essentially isotropic material with a refraction index essentially equal to one of said refraction index of the liquid crystals (2) in at least one region of the cell on one (7) of the two faces of the chamber, wherein the cell further comprises a second diffraction grating (30) in said region, formed on the other face (8) of the chamber by non contiguous parallel bands (31), made of a second transparent, optically essentially isotropic material, **characterized in that** the second material has a refraction index essentially equal to the other of said refraction index of the liquid crystals (2), and **in that** the electrodes, liquid crystals and gratings are arranged so as to produce, while functioning, an activity switching of one diffraction grating to another for a linearly polarized beam when voltage is switched.

**2.** Liquid crystal cell according to claim 1, **characterized in that** the material of said bands (11, 12, 31) is a polymer.

**3.** Liquid crystal cell according to claim 2, **characterized in that** the material of said bands (11, 12, 31) is a photopolymer, wherein said bands are formed by etching of a photopolymer's layer.

**4.** Liquid crystal cell according to claim 1, **characterized in that** said second grating (30) has a geometry different from the first grating (10).

**5.** Liquid crystal cell according to claim 1 or 4, **characterized in that** the bands (31) of the second grating have a direction identical to the one of the bands (11, 12) of the first grating.

**6.** Liquid crystal cell according to claim 1 or 4, **characterized in that** the bands (31) of the second grating have a direction different from the one of the bands (11, 12) of the first grating.

**7.** Liquid crystal cell according to any of the previous claims, **characterized in that** said electrodes (5, 6) stretch over the totality of said region.

**8.** Liquid crystal cell according to any of the previous claims, **characterized in that** the liquid crystals (2) are of a nematic type.

**9.** Optical beam splitter comprising a liquid crystal cell (29) according to any of the preceding claims and control means (25) for selectively apply a voltage between said electrodes (5, 6) of the liquid crystal cell.

**Patentansprüche**

1.  Flüssigkristallzelle (29) mit einer Schicht von doppelbrechenden Flüssigkristallen (2) in einem Raum, dessen zwei entgegengesetzte Seiten durch zwei Schichtträger (3, 4) definiert sind, die mit durchsichtigen Elektroden (5, 6) versehen sind, wobei die Flüssigkristalle einen gewöhnlichen und einen aussergewöhnlichen Brechungsindex haben, wobei ein erstes Beugungsgitter (10) in wenigstens einer Region der Zelle auf einer (7) der zwei Seiten des Raums durch zwei nicht anstossende parallele Streifen (11, 12) geformt ist, die aus einem durchsichtigen, im Wesentlichen optisch isotropischen Material bestehen, mit einem Brechungsindex im Wesentlichen gleich einem der besagten Brechungsindizes der Flüssigkristalle (2), wobei die Zelle ferner ein zweites Beugungsgitter (30) in der besagten Region umfasst, das auf der anderen Seite (8) des Raums durch zwei nicht anstossende parallele Streifen (31) geformt ist, die aus einem zweiten durchsichtigen, im Wesentlichen optisch isotropen Material bestehen, **dadurch gekennzeichnet, dass** das zweite Material einen Brechungsindex in Wesentlichen gleich dem anderen der besagten Brechungsindizes der Flüssigkristalle (2) besitzt, und dass die Elektroden, Flüssigkristalle und Gitter so angeordnet sind, dass eine Umkehrung der Spannung in Betrieb für einen linear polarisierten Strahl eine Umkehrung der Aktivität von einem Beugungsgitter zu dem anderen herstellt.

2.  Flüssigkristallzelle gemäss Anspruch 1, **dadurch gekennzeichnet, dass** das Material für die Streifen (11, 12, 31) ein Polymer ist.

3.  Flüssigkristallzelle gemäss Anspruch 2, **dadurch gekennzeichnet, dass** das Material für die Streifen (11, 12, 31) ein Photopolymer ist, wobei die besagten Streifen durch ätzen einer Schicht des Photopolymers gebildet sind.

4.  Flüssigkristallzelle gemäss Anspruch 1, **dadurch gekennzeichnet, dass** das besagte Beugungsgitter (30) eine Geometrie hat, die verschieden von der des ersten Beugungsgitters (10) ist.

5.  Flüssigkristallzelle gemäss Anspruch 1 oder 4, **dadurch gekennzeichnet, dass** die Streifen (31) des zweiten Beugungsgitters die gleiche Richtung wie die Streifen (11, 12) des ersten Beugungsgitters haben.

6.  Flüssigkristallzelle gemäss Anspruch 1 oder 4, **dadurch gekennzeichnet, dass** die Streifen (31) des zweiten Beugungsgitters eine andere Richtung als die Streifen (11, 12) des ersten Beugungsgitters haben.

7.  Flüssigkristallzelle gemäss einem der vorigen Ansprüche, **dadurch gekennzeichnet, dass** die besagten Elektroden (5, 6) sich über die gesamte Region erstrekken.

8.  Flüssigkristallzelle gemäss einem der vorigen Ansprüche, **dadurch gekennzeichnet, dass** die Flüssigkristalle (2) nematisch sind.

9.  Strahlteiler, umfassend eine Flüssigkristallzelle (29) gemäss einem der vorigen Ansprüche und Steuermittel (25), um wahlweise eine Spannung zwischen den besagten Elektroden (5, 6) der Flüssigkristallzelle anzulegen.

## Fig. 1

## Fig. 2

## Fig. 3

# Fig. 4

29

33
31

33
31

4

8

6

J

30

Q   Q   Q   Q   Q

2

10

7

H

5

3

21

# Fig. 5

16

21

29

34

26

25

# Fig. 6

16

21

29

24

26

25

**EP 1 324 110 B1**

## RÉFÉRENCES CITÉES DANS LA DESCRIPTION

**Documents brevets cités dans la description**

- FR 2254057
- US 5650835 A
- US 4729640 A
- WO 9942993 A